# EUROPEAN PATENT SPECIFICATION

(11) **EP 2 903 424 B1**
(45) Date of publication and mention of the grant of the patent: **04.01.2017**
(21) Application number: 13759865.2
(22) Date of filing: 26.08.2013
(51) Int. Cl.: A01K 1/10, A01K 5/02

(54) **UNMANNED AUTONOMOUS BARN VEHICLE FOR DISPLACING FEED**
UNBEMANNTES, AUTONOMES STALLFAHRZEUG ZUR FUTTERVERTEILUNG
VÉHICULE AUTONOME NON ACCOMPAGNÉ PERMETTANT DE DÉPLACER DES ALIMENTS

(30) Priority: 05.10.2012 NL 2009575
(43) Date of publication of application: 12.08.2015
(73) Proprietor: Lely Patent N.V., 3147 PB Maassluis (NL)
(72) Inventor: PASTOOR, Jan Lambertus, 3147 PA Maassluis (NL); SIE, Howard, 3147 PA Maassluis (NL); VAN DEN BERG, Karel, 3147 PA Maassluis (NL)
(74) Representative: Octrooibureau Van der Lely N.V.
(86) International application number: PCT/NL2013/050613
(87) International publication number: WO 2014/054941

(56) References cited:
- EP-A1- 1 779 722
- DE-A1-102009 024 079
- FR-A1- 2 862 489

## Description

### FIELD OF THE INVENTION

The invention relates to an autonomous and self-propelled barn vehicle for substantially laterally displacing feed situated on a ground by means of feed-displacement means.

### BACKGROUND TO THE INVENTION

Such an unmanned autonomous barn vehicle is known from patent document WO-2007/120036-A1, and an improved vehicle is known from patent document WO-2009/070007-A1. The known vehicle comprises a frame to which feed-displacement means are fitted in the form of a freely rotating circular element, the outer periphery of which forms the outer periphery of the unmanned barn vehicle. The feed is displaced substantially laterally with respect to the direction of travel of the vehicle, thus either substantially to the left or substantially to the right of the longitudinal axis of the vehicle. This vehicle is used in animal housing units in which, for example, cows can reach the feed on the ground through a feed fence in order to eat. The vehicle then ensures that the feed comes to lie near the feed fence and remains within reach of the cows. Additionally feed/material pushing vehicles having displacing means in the form of pushing blades at both sides of a traveling body are known from EP1779722 and DE102009024079.

### DESCRIPTION OF THE INVENTION

It is an object of the present invention to provide a barn vehicle having an improved feed-displacement function.

This and other objects and further advantages are met or exceeded by the present invention providing an autonomous and self-propelled barn vehicle for substantially laterally displacing feed situated on a ground at a feed fence in a barn, the vehicle comprising a frame, a control unit for controlling the vehicle and moving it in a direction of travel, a housing arranged on the frame, wherein the housing comprises main feed-displacement means for displacement of feed in a main outward direction which is substantially lateral with respect to the direction of travel, and separate ancillary feed-displacement means for lateral displacement of feed in an outward direction opposite to said main direction, and wherein preferably the main and ancillary feed-displacement means operate simultaneously in normal or regular use and wherein the outer periphery of the housing forms the outer periphery of the vehicle, preferably having a substantially circular form, except for the ancillary feed-displacement means which is positioned outside the outer periphery and in the direction of travel operatively ahead of the main feed-displacement means.

As will be appreciated herein below, and except as otherwise indicated, the direction of travel means the direction straight ahead. This direction thus corresponds to a longitudinal axis of the barn vehicle according to this invention.

In accordance with the invention it has been found that an improved feed-displacement function is achieved and corresponding improved barn hygiene. In particular when operating a relatively large barn vehicle in a fairly narrow feeding alley (e.g. a barn vehicle having an operating diameter of about 1 meter in a feeding alley having a width of 3 meters or less) having cows on both walls it may happen that where feed is displaced by a barn vehicle e.g. laterally to the right as seen in the direction of travel, feed lying on the left side of the feeding alley is positioned on the edge of the traveling path of the barn vehicle and is not displaced neatly to the right, because in particular the known vehicles feed displacement means are less effective at the extreme side ends. The feed will only be shifted slightly from the left, but not completely to the right. Thereby, feed on the left will only be scattered more or spread out, and be left to be driven over by the wheels, which is an undesirable effect for example from a hygienic point of view. Advantageously, using the ancillary feed-displacement means in accordance with the invention, such feed is now displaced away from the path of travel of the barn vehicle into a direction opposite of the main feed-displacement direction and thereby avoiding any undesired spreading out of feed on the floor. It also limits skid on any of the driven wheels due to the spread out feed. Any snow that might be in the path of travel during wintertime is displaced as well, thereby avoiding that the vehicle gets bogged down. And due to the feed displacement in both directions, compact feed stacks or shoulders are maintained such that any feed-height sensor, if applied, can be more effectively.

For the purpose of this invention it is to be understood that it relates to a barn vehicle and not to a haymaking vehicle. The latter is an agricultural vehicle used outdoors in the open field and is commonly not autonomous or self-propelled, but instead towed or driven by a tractor or the like. Haymaking vehicles, and in particular rakes and tedders and their corresponding hay displacement mechanisms, are explicitly disclaimed from the scope of this invention.

In a preferred embodiment the main feed-displacement means and the ancillary feed-displacement means have an overlapping working range, thereby further EP2903424 improving the feed displacement efficiency and barn hygiene.

In an embodiment the main feed-displacement means and the ancillary feed-displacement means are operatively connected, e.g. mechanically connected, to achieve the effect that when the main feed-displacement means are lifted from the ground the ancillary feed-displacement means are lifted simultaneously, so that it will for example be possible for the barn vehicle to move to another site, in which case the feed displacing means will remain free from the ground between two working sited. To that effect it is advantageous that the barn vehicle is provided also with height adjustment means. Such a height adjusting device can be arranged also for an automatic height adjustment, in particular such that the feed displacing means will exert a substantially constant pressure on a ground in the embodiment that these are arranged for frictional drive with the ground and/or the feed.

The main feed-displacement means may be constituted by an obliquely disposed slide, or by a conveyer belt. However, in a preferred embodiment the main feed-displacement means are rotatable with respect to the frame. More preferably it has a cylindrical shape which is rotationally symmetrical, as a result of which the main feed-displacement means do not twist when rotating about the cylinder axis and can therefore be of a stiffer design, which improves the effectiveness of the feed-displacement function. In addition, a cylindrical shape offers most space for wheels and this makes it possible to choose a relatively large wheel base, which in turn means reliable stability of the barn vehicle.

In a preferred embodiment the ancillary feed-displacement means are rotatable with respect to the frame to obtain optimum feed displacement.

In an alternative embodiment, the ancillary feed-displacement means is constituted by an obliquely disposed slide.

In embodiments, the feed-displacement means, either or both of the main and ancillary feed-displacement means, may be arranged freely rotatably for frictional drive with the ground and/or the feed, and more preferably the feed-displacement means comprise a circular element freely rotatable for frictional drive with the ground and/or the feed. Such a construction without motor and the like is obviously very simple and reliable. Alternatively, drive means for the feed-displacement means can be provided. The actuation thereof may depend on the amount of feed and thus on the possibility to drive the feed-displacement means by means of frictional contact between feed-displacement means and feed. Thus, in an embodiment, it may be provided that the drive means for the feed-displacement means are only actuated if the amount of feed for contact with the feed-displacement means is below a predetermined level. This therefore renders the operation of the feed-displacement means even more reliable and makes it possible, for example, to choose a drive direction in the opposite direction to the "natural" direction with only friction.

In an embodiment, the autonomous barn vehicle is provided with:
- at least two wheels positioned on either side of the centerline or longitudinal axis of the vehicle and which can be driven separately by separate drive means; a front wheel can be provided as additional supporting point, which may be a non-driven wheel, such as a swivel wheel, or also, for example, a guide block or the like;
- a distance-determining means for determining the distance of the vehicle to a wall or feed fence section, and which preferably comprises an ultrasonic sensor, and alternatively may comprise for example an inductive sensor or an optical sensor;
- a control unit for controlling and moving the vehicle in the direction of travel; and
wherein the control unit is programmed in such a way that the barn vehicle, during operation, remains at a distance to the wall or feed fence section which is determined by the distance-determining means, which distance is greater than or equal to a preset minimum distance to the wall or feed fence section. This ensures that the autonomous barn vehicle can autonomously displace feed substantially at right angles to the direction of travel without a separate guide, despite the fact that the feed exerts an (unpredicted) reactive force on the autonomous vehicle.

In an embodiment the two separate drive means for the wheels are replaced by one drive means with a drive power-distributing means, such as a transmission.

In an embodiment the autonomous vehicle is provided with a rechargeable power supply.

More preferably each of the main feed-displacement means and the ancillary feed-displacement means comprises a circular element, and wherein the diameter of the main feed-displacement means is larger than of the ancillary feed-displacement means.

In an embodiment, at least a bottom edge of the bottom section of the feed-displacement means, either or both of the main and ancillary feed-displacement means, is made of a rubber material. This has the advantage that there is sufficient friction with the ground and/or the feed in order to drive the feed-displacement means. Another advantage is that the contact between feed-displacement means and the ground and/or feed does not result in significant damage as the rubber is deformable. Whereas a disadvantage of the use of metal would be that due to the direct contact with the ground, the metal part may develop over time sharp edges which could form a safety problem should a person or animal get into direct contact with operational metallic feed-displacement means.

In an embodiment the cylindrical part of the feed-displacement means, either or both of the main and ancillary feed-displacement means, is composed of one or more rectangular parts. Rectangular parts can be made simply by means of straight cuts or, for example, by punching.

In an advantageous embodiment the autonomous barn vehicle is provided with a storage container for containing feed. The storage container is then preferably provided with a discharge device for discharging or dispensing feed in the direction of the ground. The discharge device can be arranged on top of the autonomous vehicle and can discharge the feed by means of the upper section of the housing. Alternatively, or in addition thereto, the discharge device may comprise, for example, an opening, which, viewed in the direction of travel, is situated at the front of the storage container in order to discharge the feed in the direction of a bottom section which is situated at the front of the vehicle. The storage container is preferably provided with a mixing device for mixing feed. Such a mixing device may be provided with an auger.

Preferably, the discharge device is designed to discharge the feed in the direction of the ground section which is situated in front of the autonomous vehicle, preferably by means of a dispensing opening which is, viewed in direction of travel, situated at the front of the autonomous vehicle, so that the feed is mixed in with the feed which is already present on the floor and is then displaced laterally by the autonomous vehicle in the direction of animals for which the feed is intended. In other words, the discharge device has a discharge opening which, viewed in the direction of travel, is situated at the front of the storage container.

In an embodiment the main feed-displacement means comprises a circular element having a diameter in a range of about 0.5 m to about 2 m, and preferably in a range of about 0.5 m to about 1.7 m. In the embodiment where there is also provided a storage container, the diameter is preferably in a range of about 0.8 m to about 1.7 m, for example having a diameter of about 1 m or of about 1.2 m.

In the embodiment where the ancillary feed-displacement means comprises a circular element, the diameter of the circular element is preferably in a range of about 0.3 m to about 1 m, and more preferably in a range of about 0.3 m to about 0.8 m, for example having a diameter of about 0.5 m.

In an embodiment of the autonomous barn vehicle it is further comprising an orientation determining means, for example a gyroscope, for determining the orientation of the centerline of the vehicle relative to the feed fence. It will be clear that all sensors known in the art may be used for orientation determination, such as an electronic compass or a camera with image recognition equipment.

In a further aspect of the invention it relates to a combination of a barn having two substantially parallel feed fences and a feed alley therebetween, and a barn vehicle according to this invention, preferably provided with a storage container for containing feed, and with a discharge device for discharging feed to the floor, and preferably for discharging feed in front of the barn vehicle viewed in the direction of travel, having a barn vehicle width of about 1.2 meter or less, and wherein the feed alley has a width of at most three times the barn vehicle width, and preferably the feed alloy has a width of about 3 meters or less.

The invention will now be illustrated with reference to non-limiting figures and embodiments according to the invention, and in which:
Fig. 1 shows a diagrammatic side view of a barn vehicle according to an embodiment of the invention;
Fig. 2 shows a diagrammatic view of the vehicle from Fig. 1 in operation;
Fig. 3 shows a schematic view of a vehicle according to an embodiment of the invention;
Fig. 4 shows a schematic view of a barn vehicle not according to the invention.

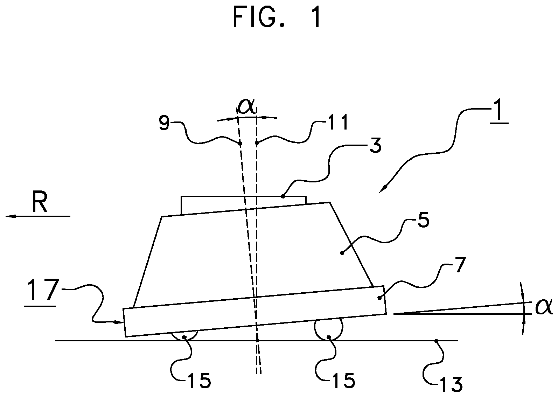

Fig. 1 shows a diagrammatic view of a barn vehicle 1 according to the invention devoid of the ancillary feed-displacement means but still illustrating certain aspects of the invention. The barn vehicle 1 comprises a frame 3 and a housing 5 which is arranged on the frame, wherein the housing comprises main feed-displacement means 7 for displacing feed substantially laterally with respect to a direction of travel R. The outer periphery of the housing 5 forms the outer periphery of the vehicle 1. The main feed-displacement means 7 are situated in the bottom section of the housing 5 of the vehicle, are cylindrical and have a cylinder axis 9. The main feed-displacement means 7 are rotatable with respect to the frame 3 about the cylinder axis 9 which is at an angle α to the vertical, illustrated here by the dash-dotted line 11. The angle between the cylindrical axis and the vertical is adjustable, preferably in a range between 1 and 10 degrees, preferably between 1 and 5 degrees, an inclination will thus be obtained which can be used for most types of feed. Furthermore, the fact that the angle which the cylinder axis makes with the vertical corresponds to the angle which the main feed-displacement means make with the horizontal, thus facilitating the adjustment thereof compared to the known vehicle disclosed in patent document WO-2009/070007-A1. The main feed-displacement means 7 are substantially rotationally symmetrical about the cylinder axis 9. The barn vehicle 1 is movable in the direction of travel R with respect to the ground 13 by means of wheels 15 which are attached to the frame 3. Due to the inclined position of the cylinder axis 9, a part 17 of the main feed-displacement means 7 which, viewed in the direction of travel, is situated at the front is arranged closer to the ground 13. As a result thereof, the barn vehicle is effectively able to laterally displace feed which is situated on the ground at the front of the vehicle without feed ending up under the vehicle. The main feed-displacement means are in contact with the ground 13 at the front in order to prevent feed from ending up under the vehicle and to ensure that as much feed as possible is displaced laterally. The contact with the ground can also be used to drive the feed-displacement means by means of frictional contact with the ground. However, it is also possible to provide a separate drive means for the main feed-displacement means. The front wheel may be a non-driven wheel, such as a swivel wheel. Other arrangements of the main feed-displacement means can be found for example in patent document WO-2007/120036-A1 and in WO-2009/070007-A1.

In a preferred embodiment, a storage container can be arranged on top of the barn vehicle 1 in order to store feed. The storage container is then preferably provided with a discharge device for dispensing feed in the direction of the ground. This discharge device comprises, for example, an opening which, viewed in the direction of travel, is situated at the front of the storage container in order to discharge the feed in the direction of a bottom section which is situated at the front of the barn vehicle. As a result thereof, the feed is mixed with the feed already situated on the ground and is displaced laterally together with the latter.

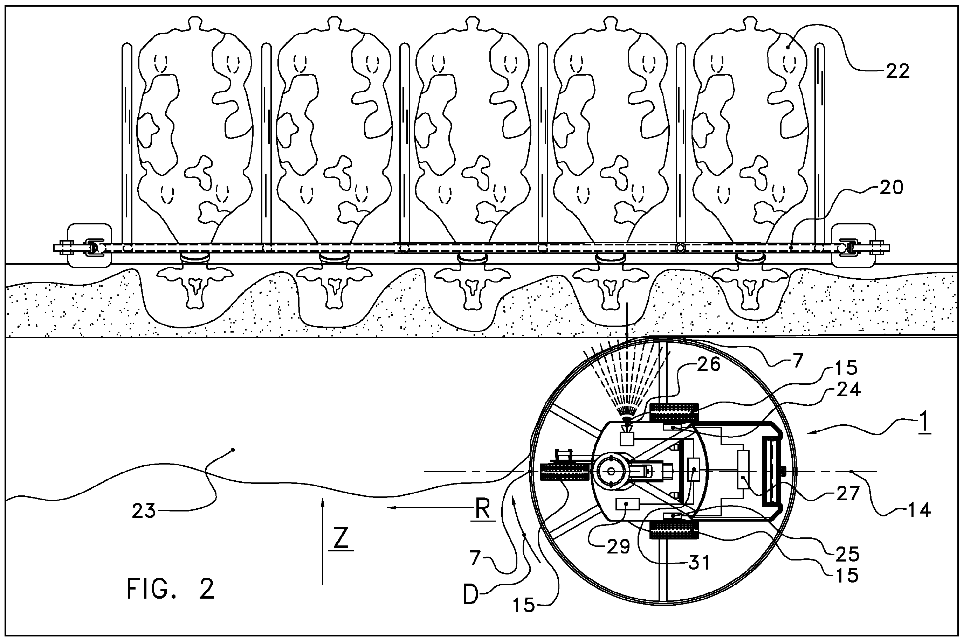

Fig. 2 shows a top view of a cut-away vehicle 1 according to Fig. 1 in operation. A wall section or feeding fence 20 through which animals, in this case cows 22, can push their head through in order to be able to reach feed 23 is shown. As a result of eating, feed may end up out of reach of the cows. In order not to let this feed go to waste, it is therefore customary to bring the feed again within reach of the cows by means of pushing it on. This task is carried out by barn vehicle 1. Barn vehicle 1 moves parallel with respect to the wall section 20 in a direction of travel R. During its movement, the main feed-displacement means 7 make frictional contact with the ground, as a result of which it starts to rotate in direction D. As a result of this rotation, feed situated in front of the vehicle is displaced in the lateral main direction Z and again brought within reach of the cows. The barn vehicle 1 is driven by separate drive means 24,25 which drive side wheels 15 separately. In this embodiment, the front wheel 15 cannot be driven. The front wheel is freely rotatable about a substantially vertical axis in order to make it possible to take bends. The vehicle is furthermore provided with a distance-determining means 26 for determining the distance of the vehicle to the wall or feed fence section 20. By means of a user input 29, a desired minimum distance can be input by a user. This minimum distance is compared to the distance measured by the distance-determining means 26 in unit 31, after which the control unit 27 ensures that the vehicle remains at a distance to the wall or feed fence section during operation, which distance is greater than or equal to the preset minimum distance to the wall section and is determined by the distance-determining means. As a result thereof, the centerline 14 of the barn vehicle remains substantially parallel to the wall section when the barn vehicle is displaced in the direction of travel.

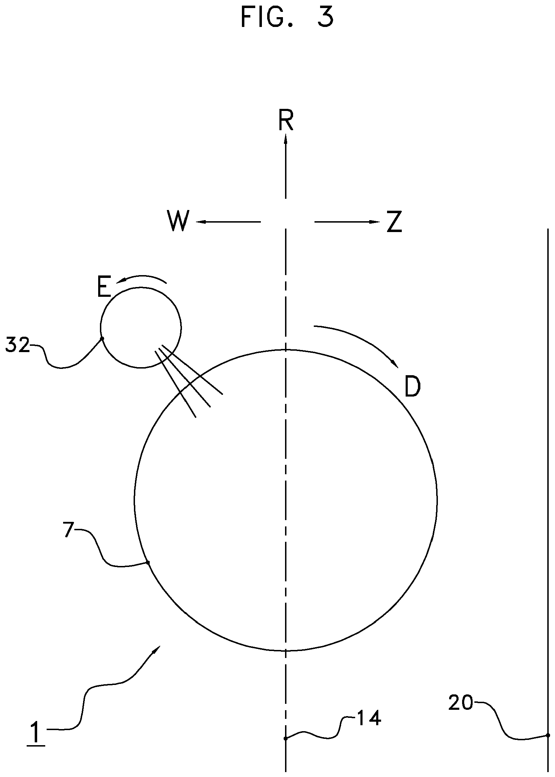

Fig. 3 shows a schematic top-view of a barn vehicle according to an embodiment of the invention. The barn vehicle 1 is provided with main feed-displacement means 7 as already shown in Fig. 2, and making frictional contact with the ground, as a result of which it rotates in direction D. As a result of this rotation, feed situated in front of the barn vehicle is displaced in the lateral main direction Z and again brought within reach of the cows. In this embodiment the housing is provided with ancillary feed-displacement means 32, which are separate from the main feed-displacement means 7, and which rotate in direction E. As a result of this rotation, feed situated in front of the ancillary feed-displacements means 32 is displaced in lateral direction W, which is opposite to the main direction Z of the main feed-displacement means 7.
It is preferred that the ancillary feed-displacement means 32 are ground driven in an analogue manner as the main feed-displacement means 7, but it can be provided also with its own driving means. In this embodiment the ancillary feed-displacement means comprise a freely rotatably circular element having a diameter smaller than the diameter of the main feed-displacement means, for example about 1 m against about 0.4 m respectively, and wherein the ancillary feed-displacement means are positioned outside the outer periphery of the vehicle 1, and, seen in the direction of travel R, positioned operatively ahead of the main feed-displacement means 7. Due to its frictional contact with the ground, the known autonomous barn vehicles are less effective at their extreme side ends, in particular on the side opposite to the main displacement direction. The ancillary feed-displacement means bring part of the feed out of the operational reach of the main feed-displacements means, thereby avoiding any undesired spreading out of feed over the floor on its less effective side. It also limits skid on any of the driven wheels due to the spread out feed.

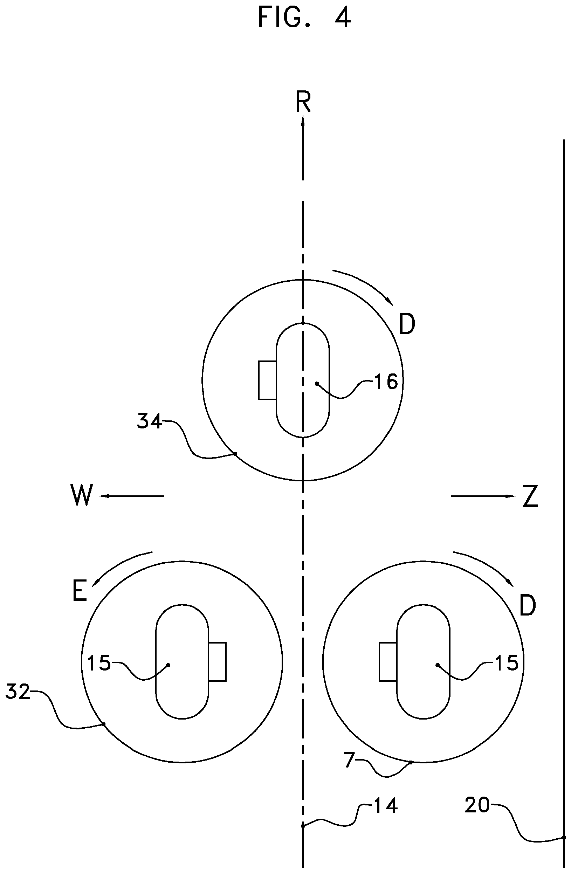

Fig. 4 shows a schematic top-view of a barn vehicle not according to the claimed invention. In figure 4, not according to the claimed invention the barn vehicle is provided with two driven wheels 15 positioned on either side of the centerline 14 of the vehicle, and is furthermore provide with a front wheel 16. The main feed-displacement means 7,34 are centered about a first wheel 15, in this example about the right wheel, and also about the front wheel 16, and whereby the ancillary feed-displacement means 32 are centered about the second wheel 15, in this example about the left wheel. Both the main and ancillary feed-displacement means are making frictional contact with the ground, as a result of which they rotate in direction D and E respectively. As a result of the rotation of the main feed-displacements means 7,34, feed situated in front of the barn vehicle is displaced in the lateral main direction Z and again brought within reach of the cows. Whereas feed situated in front of the ancillary feed-displacement means 32 and not already displaced by the main feed-displacement means about the front wheel 16 is being displaced in lateral direction W, which direction is opposite to the main direction Z of the main feed-displacement means 7. This approach avoids any undesired spreading out of feed on the floor on the less effective side of the main feed-displacements means, as such feed is displaced effectively by the ancillary feed-displacements means 32. It also limits skid on any of the wheels due to the spread out feed. The main feed-displacement means 7,34 and the ancillary feed-displacement means 32 comprise a freely rotatably circular element. The feed-displacement means 7,32 about the driven wheel 15 have substantially the same diameter, for example about 0.7 m, and the feed-displacement means about the front wheel may have the same diameter as for the feed-displacement means about the rear wheel, but it can also be chosen to have a different diameter, either smaller or larger.

While various embodiments of the present invention have been described in detail, it is apparent that modifications and adaptations of those embodiments will occur to those skilled in the art. However, it is expressly understood that such modifications and adaptations are within the scope of the present invention, with the exception of figure 4

## Claims

1. Autonomous and self-propelled barn vehicle (1) for substantially laterally displacing feed situated on a ground at a feed fence in a barn, the vehicle comprising a frame (3), a control unit (27) for controlling the vehicle and moving it in a direction of travel, a housing (5) arranged on the frame, wherein the housing comprises main feed-displacement (7,34) means for displacement of feed in a main outward direction which is substantially lateral with respect to the direction of travel, and separate ancillary feed-displacement means (32) for lateral displacement of feed in an outward direction opposite to said main direction and wherein the outer periphery of the housing forms the outer periphery of the vehicle except for the ancillary feed-displacement means which is positioned outside the outer periphery and in the direction of travel operatively ahead of the main feed-displacement means.

2. An autonomous barn vehicle according to claim 1, wherein the main feed-displacement means (7,34) and the ancillary feed-displacement means (32) have an overlapping working range.

3. An autonomous barn vehicle according to claim 1 or 2, wherein the main feed-displacement means (7,34) and the ancillary feed-displacement means (32) are operatively connected.

4. An autonomous barn vehicle according to any one of claims 1 to 3, wherein the ancillary feed-displacement means are rotatable with respect to the frame.

5. An autonomous barn vehicle according to any one of claims 1 to 4, wherein the main feed-displacement means (7,34) are rotatable with respect to the frame (3).

6. An autonomous barn vehicle according to any one of claims 1 to 5, wherein the main feed-displacement means (7,34) are arranged freely rotatably for frictional drive with the ground and/or the feed, and preferably the main feed-displacement element comprises a circular element freely rotatably for frictional drive with the ground and/or the feed.

7. An autonomous barn vehicle according to any one of claims 1 to 6, wherein the ancillary feed-displacement means (32) are arranged freely rotatably for frictional drive with the ground and/or the feed, and preferably wherein the ancillary feed-displacement element comprises a circular element freely rotatably for frictional drive with the ground and/or the feed.

8. An autonomous barn vehicle according to any one of claims 1 to 7,
wherein the autonomous vehicle is provided with two wheels (15), a first wheel and a second wheel, positioned on either side of a centerline (14) of the vehicle and which are drivable separately by separate drive means.

9. An autonomous barn vehicle according to claim 1 to 7, wherein both the main feed-displacement means (7,34) and the ancillary feed-displacement means (32) comprises a circular element, and wherein the diameter of the main feed-displacement means is larger than of the ancillary feed-displacement means.

10. An autonomous barn vehicle according to any one of claims 1 to 9, wherein at least a bottom edge of the bottom section of the main feed-displacement means (7, 34) is made of rubber.

11. An autonomous barn vehicle according to any one of claims 1 to 10, wherein at least a bottom edge of the bottom section of the ancillary feed-displacement means (32) is made of rubber.

12. An autonomous barn vehicle according to any one of claims 1 to 11, wherein the autonomous vehicle is provided with a storage container for containing feed, and with a discharge device for discharging feed to the floor, and preferably for discharging feed in front of the barn vehicle.

13. Combination of a barn having two substantially parallel feed fences (20) and a feed alley therebetween, and an autonomous barn vehicle (1) according to any one of claims 1 to 11 and provided with a storage container for containing feed, and with a discharge device for discharging feed to the floor, having a vehicle width of 1.2 m or less, and wherein the feed alley has a width of at most three times the barn vehicle width.

## Patentansprüche

1. Autonomes und selbstfahrendes Stallfahrzeug (1) zum im Wesentlichen seitlichen Verschieben von Futter, das an einem Futterzaun in einem Stall auf einem Boden liegt, wobei das Fahrzeug umfasst: einen Rahmen (3), eine Steuereinheit (27) zum Steuern des Fahrzeugs und Bewegen desselben in eine Fortbewegungsrichtung, ein auf dem Rahmen angeordnetes Gehäuse (5), wobei das Gehäuse ein Haupt-Futterverschiebungsmittel (7, 34) zur Verschiebung von Futter in einer Haupt-Auswärtsrichtung, welche im Wesentlichen seitlich bezüglich der Fortbewegungsrichtung ist, und ein separates Hilfs-Futterverschiebungsmittel (32) zur seitlichen Verschiebung von Futter in eine zu der Hauptrichtung entgegengesetzte Auswärtsrichtung umfasst, und wobei der Außenumfang des Gehäuses den Außenumfang des Fahrzeugs bildet, außer für das Hilfs-Futterverschiebungsmittel, welches außerhalb des Außenumfangs und in der Fortbewegungsrichtung funktionell vor dem Haupt-Futterverschiebungsmittel positioniert sind.

2. Autonomes Stallfahrzeug nach Anspruch 1, wobei das Haupt-Futterverschiebungsmittel (7, 34) und das Hilfs-Futterverschiebungsmittel (32) einander überlappende Arbeitsbereiche aufweisen.

3. Autonomes Stallfahrzeug nach Anspruch 1 oder 2, wobei das Haupt-Futterverschiebungsmittel (7, 34) und das Hilfs-Futterverschiebungsmittel (32) in Wirkverbindung stehen.

4. Autonomes Stallfahrzeug nach einem der Ansprüche 1 bis 3, wobei das Hilfs-Futterverschiebungsmittel drehbar bezüglich des Rahmens ist.

5. Autonomes Stallfahrzeug nach einem der Ansprüche 1 bis 4, wobei das Haupt-Futterverschiebungsmittel (7, 34) drehbar bezüglich des Rahmens (3) ist.

6. Autonomes Stallfahrzeug nach einem der Ansprüche 1 bis 5, wobei das Haupt-Futterverschiebungsmittel (7, 34) frei drehbar für einen Reibantrieb mit dem Boden und/oder dem Futter angeordnet ist und vorzugsweise das Haupt-Futterverschiebungselement ein kreisförmiges Element umfasst, das frei drehbar für einen Reibantrieb mit dem Boden und/oder dem Futter ist.

7. Autonomes Stallfahrzeug nach einem der Ansprüche 1 bis 6, wobei das Hilfs-Futterverschiebungsmittel (32) frei drehbar für einen Reibantrieb mit dem Boden und/oder dem Futter angeordnet ist, und wobei vorzugsweise das Hilfs-Futterverschiebungselement ein kreisförmiges Element umfasst, das frei drehbar für einen Reibantrieb mit dem Boden und/oder dem Futter ist.

8. Autonomes Stallfahrzeug nach einem der Ansprüche 1 bis 7, wobei das autonome Fahrzeug mit zwei Rädern (15), einem ersten Rad und einem zweiten Rad, versehen ist, die beiderseits einer Mittellinie (14) des Fahrzeugs positioniert sind, und welche von separaten Antriebsmitteln separat antreibbar sind.

9. Autonomes Stallfahrzeug nach einem der Ansprüche 1 bis 7, wobei sowohl das Haupt-Futterverschiebungsmittel (7, 34) als auch das Hilfs-Futterverschiebungsmittel (32) ein kreisförmiges Element umfassen, und wobei der Durchmesser des Haupt-Futterverschiebungsmittels größer als derjenige des Hilfs-Futterverschiebungsmittels ist.

10. Autonomes Stallfahrzeug nach einem der Ansprüche 1 bis 9, wobei wenigstens ein unterer Rand des unteren Abschnitts des Haupt-Futterverschiebungsmittels (7, 34) aus Gummi hergestellt ist.

11. Autonomes Stallfahrzeug nach einem der Ansprüche 1 bis 10, wobei wenigstens ein unterer Rand des unteren Abschnitts des Hilfs-Futterverschiebungsmittels (32) aus Gummi hergestellt ist.

12. Autonomes Stallfahrzeug nach einem der Ansprüche 1 bis 11, wobei das autonome Fahrzeug mit einem Speicherbehälter zum Aufnehmen von Futter und mit einer Austragsvorrichtung zum Austragen von Futter auf den Boden, und vorzugsweise zum Austragen von Futter vor dem Stallfahrzeug, versehen ist.

13. Kombination eines Stalls, der zwei im Wesentlichen parallele Futterzäune (20) und einen Futtergang zwischen diesen aufweist, und eines autonomen Stallfahrzeugs (1) nach einem der Ansprüche 1 bis 11, das mit einem Speicherbehälter zum Aufnehmen von Futter und mit einer Austragsvorrichtung zum Austragen von Futter auf den Boden versehen ist und eine Fahrzeugbreite von 1,2 m oder weniger aufweist, und wobei der Futtergang eine Breite aufweist, die höchstens das Dreifache der Breite des Stallfahrzeugs beträgt.

## Revendications

1. Véhicule d'étable (1) autonome et autopropulsé pour déplacer pratiquement latéralement de la nourriture située sur le sol à une barrière d'alimentation dans une étable, le véhicule comprenant un châssis (3), une unité de commande (27) pour commander le véhicule et le déplacer dans une direction de marche, un capot de protection (5) disposé sur le châssis, dans lequel le capot renferme un moyen principal (7, 34) de déplacement de nourriture, pour déplacer de la nourriture dans une direction principale vers l'extérieur qui est sensiblement latérale par rapport à la direction de marche, et un moyen séparé auxiliaire (32) de déplacement de nourriture, pour déplacer latéralement de la nourriture dans une direction vers l'extérieur opposée à ladite direction principale et dans lequel la périphérie extérieure du capot constitue la périphérie extérieure du véhicule à l'exception du moyen auxiliaire de déplacement de nourriture qui est placé à l'extérieur de la périphérie extérieure et dans la direction de marche fonctionnellement en avant du moyen principal de déplacement de nourriture.

2. Véhicule d'étable autonome selon la revendication 1, dans lequel le moyen principal (7, 34) de déplacement de nourriture et le moyen auxiliaire (32) de déplacement de nourriture ont des espaces de travail qui se chevauchent.

3. Véhicule d'étable autonome selon la revendication 1 ou 2, dans lequel le moyen principal (7, 34) de déplacement de nourriture et le moyen auxiliaire (32) de déplacement de nourriture sont raccordés fonctionnellement.

4. Véhicule d'étable autonome selon l'une quelconque des revendications 1 à 3, dans lequel le moyen auxiliaire de déplacement de nourriture peut tourner par rapport au châssis.

5. Véhicule d'étable autonome selon l'une quelconque des revendications 1 à 4, dans lequel le moyen principal (7, 34) de déplacement de nourriture peut tourner par rapport au châssis (3).

6. Véhicule d'étable autonome selon l'une quelconque des revendications 1 à 5, dans lequel le moyen principal (7, 34) de déplacement de nourriture est agencé librement rotatif pour un entraînement par friction avec le sol et/ou la nourriture et de préférence l'élément principal de déplacement de nourriture comprend un élément circulaire librement rotatif pour un entraînement par friction avec le sol et/ou la nourriture.

7. Véhicule d'étable autonome selon l'une quelconque des revendications 1 à 6, dans lequel le moyen auxiliaire (32) de déplacement de nourriture est agencé librement rotatif pour un entraînement par friction avec le sol et/ou la nourriture et de préférence dans lequel l'élément auxiliaire de déplacement de nourriture comprend un élément circulaire librement rotatif pour un entraînement par friction avec le sol et/ou la nourriture.

8. Véhicule d'étable autonome selon l'une quelconque des revendications 1 à 7, dans lequel le véhicule autonome est équipé de deux roues (15), une première roue et une seconde roue, placées de chaque côté d'un axe (14) du véhicule et qui peuvent être entraînées séparément par des moyens d'entraînement séparés.

9. Véhicule d'étable autonome selon l'une quelconque des revendications 1 à 7, dans lequel tant le moyen principal (7, 34) de déplacement de nourriture que le moyen auxiliaire (32) de déplacement de nourriture comprennent un élément circulaire et dans lequel le diamètre du moyen principal de déplacement de nourriture est supérieur à celui du moyen auxiliaire de déplacement de nourriture.

10. Véhicule d'étable autonome selon l'une quelconque des revendications 1 à 9, dans lequel au moins le bord inférieur de la section inférieure du moyen principal (7, 34) de déplacement de nourriture est fait en caoutchouc.

11. Véhicule d'étable autonome selon l'une quelconque des revendications 1 à 10, dans lequel au moins le bord inférieur de la section inférieure du moyen auxiliaire (32) de déplacement de nourriture est fait en caoutchouc.

12. Véhicule d'étable autonome selon l'une quelconque des revendications 1 à 11, dans lequel le véhicule autonome est équipé d'un récipient de stockage pour contenir la nourriture et d'un dispositif de dispersion pour décharger la nourriture sur le sol et, de préférence, pour décharger la nourriture en face du véhicule d'étable.

13. Combinaison d'une étable comportant deux barrières d'alimentation (20) sensiblement parallèles et entre elles une allée d'alimentation et d'un véhicule d'étable (1) autonome selon l'une quelconque des revendications 1 à 11, équipé d'un récipient de stockage pour contenir la nourriture et d'un dispositif de dispersion pour décharger la nourriture sur le sol et ayant une largeur hors tout inférieure ou égale à 1,2 m, et dans laquelle l'allée d'alimentation a une largeur d'au moins trois fois la largeur du véhicule d'étable.
